# DEMANDE DE BREVET EUROPEEN

(11) **EP 0 533 531 A1**
(43) Date de publication de la demande: **24.03.1993**
(21) Numéro de dépôt: 92402462.3
(22) Date de dépôt: 09.09.1992
(51) Int. Cl.: B62D 61/12, B60G 3/28, B64C 25/22

(54) **Train de roulage rétractable pour un véhicule à sustentation sans contact**

(30) Priorité: 17.09.1991 FR 9111436
(71) Demandeur: MESSIER BUGATTI, F-78140 Velizy Villacoublay (FR)
(72) Inventeur: Derrien, Michel, F-78000 Versailles (FR)
(74) Mandataire: Fruchard, Guy

(57) **Abrégé**

Il comporte une poutre basculante (1) ayant une extrémité fixée de façon articulée au véhicule autour d'un axe de basculement (2) et supportant un axe de rotation (4) pour au moins une roue (5), un ressort à lame (6) ayant une première extrémité (7) fixée au véhicule et une seconde extrémité (9) fixée de façon articulée à une première extrémité d'un amortisseur (11) ayant une seconde extrémité fixée de façon articulée au véhicule, et un vérin de commande (22) associé de façon articulée d'une part à la seconde extrémité du ressort à lame (6) et d'autre part à un axe de commande de basculement (19) porté par la poutre basculante en un point espacé de l'axe de basculement (2) pour commander l'orientation de la poutre basculante.

## Description

La présente invention concerne un train de roulage rétractable pour un véhicule à sustentation sans contact.

On sait que les véhicules à sustentation sans contact, par exemple les véhicules à sustentation magnétique ou par coussin d'air, doivent posséder un train de roulage rétractable permettant d'assurer d'une part une sustentation de secours en cas de défaillance du système de sustentation sans contact, et d'autre part une sustentation et un freinage du véhicule au moment des arrêts.

On connaît du document US 3,779,574 un train de roulage rétractable comprenant une poutre basculante fixée de façon articulée à un véhicule et reliée de façon articulée à un ressort à lame et à un amortisseur portés par un bras support monté pour pivoter par rapport au véhicule et dont la position est déterminée par un vérin de commande. Lors du relevage du train de roulage, l'ensemble du train pivote avec le bras support c'est-à-dire qu'une masse très importante est déplacée et est maintenue dans une position donnée par le vérin de commande.

Selon l'invention on propose un train de roulage rétractable pour un véhicule à sustentation sans contact comportant une poutre basculante ayant une extrémité fixée de façon articulée au véhicule autour d'un axe de basculement et supportant un axe de rotation pour au moins une roue, la poutre basculante étant reliée de façon articulée à un ressort de lame, à un amortisseur et à un vérin de commande, caractérisé en ce que le ressort à lame a une première extrémité fixée au véhicule et une seconde extrémité fixée de façon articulée à une première extrémité de l'amortisseur, l'amortisseur a une seconde extrémité fixée de façon articulée au véhicule, et le vérin de commande est associé de façon articulée d'une part à la seconde extrémité du ressort à lame et d'autre part à un axe de commande de basculement porté par la poutre basculante en un point espacé de l'axe de basculement pour commander l'orientation de la poutre basculante.

Ainsi, seule la poutre basculante et les roues qu'elle porte sont déplacées par le vérin de commande de sorte que l'on peut utiliser un vérin de commande de structure plus légère que dans le dispositif antérieur.

Selon un mode de réalisation de l'invention, le vérin de commande a une première extrémité fixée de façon articulée au véhicule et une seconde extrémité fixée de façon articulée à un ensemble comprenant une bielle et un levier articulés l'un à l'autre et ayant des extrémités respectivement reliées de façon articulée à la seconde extrémité du ressort à lame et à l'axe de commande de basculement. Ainsi, lorsque les bielles articulées sont dans le prolongement l'une de l'autre le train de roulage est en position sortie et les efforts appliqués à la roue sont transmis au ressort à lame et à l'amortisseur sans passer par le vérin de commande.

Selon une variante de réalisation de ce mode de réalisation de l'invention, la première extrémité du vérin de commande est fixée de façon articulée à la poutre basculante.

Selon un autre mode de réalisation de l'invention, le vérin de commande a une première extrémité fixée de façon articulée à la seconde extrémité du ressort à lame, et une seconde extrémité fixée de façon articulée à l'axe de commande de basculement.

D'autres caractéristiques et avantages de l'invention apparaîtront à la lecture de la description qui suit de plusieurs modes de réalisation particuliers non limitatifs de l'invention en liaison avec les figures ci-jointes parmi lesquelles :
- la figure 1 est une vue en élévation d'un premier mode de réalisation de l'invention dans une position abaissée du train de roulage,
- la figure 2 est une vue analogue à celle de la figure 1 pour une position rétractée du train de roulage,
- la figure 3 est une vue en élévation d'une variante de réalisation du mode de réalisation de la figure 1 en position abaissée du train de roulage,
- la figure 4 est une vue en élévation d'un second mode de réalisation du train de roulage en position abaissée,
- la figure 5 est une vue analogue à celle de la figure 4 pour une position relevée du train de roulage.

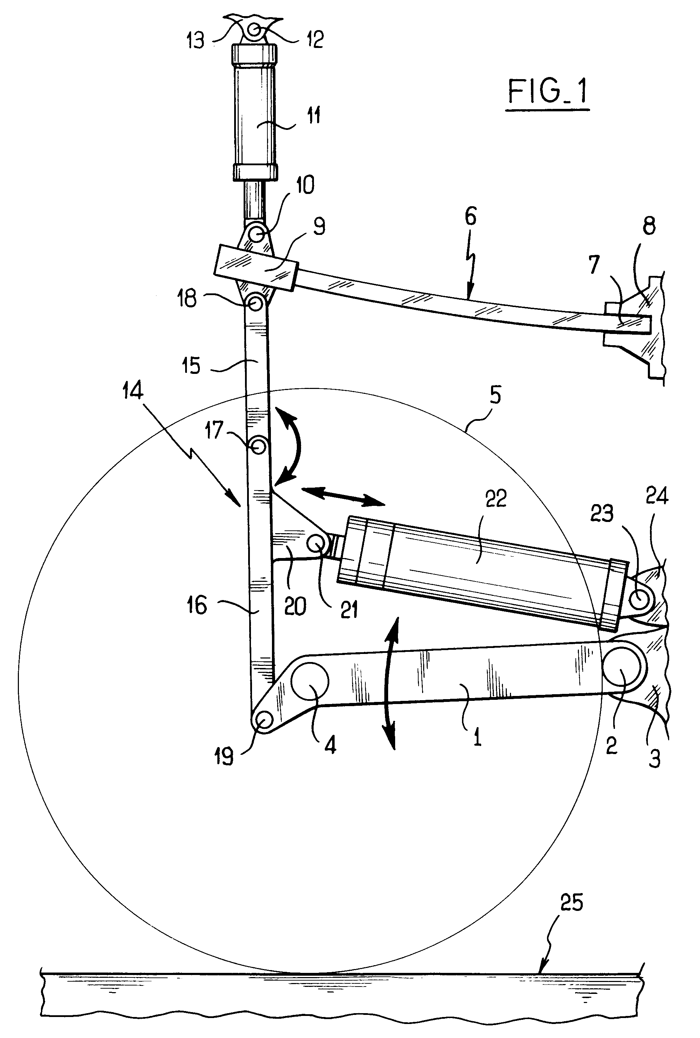

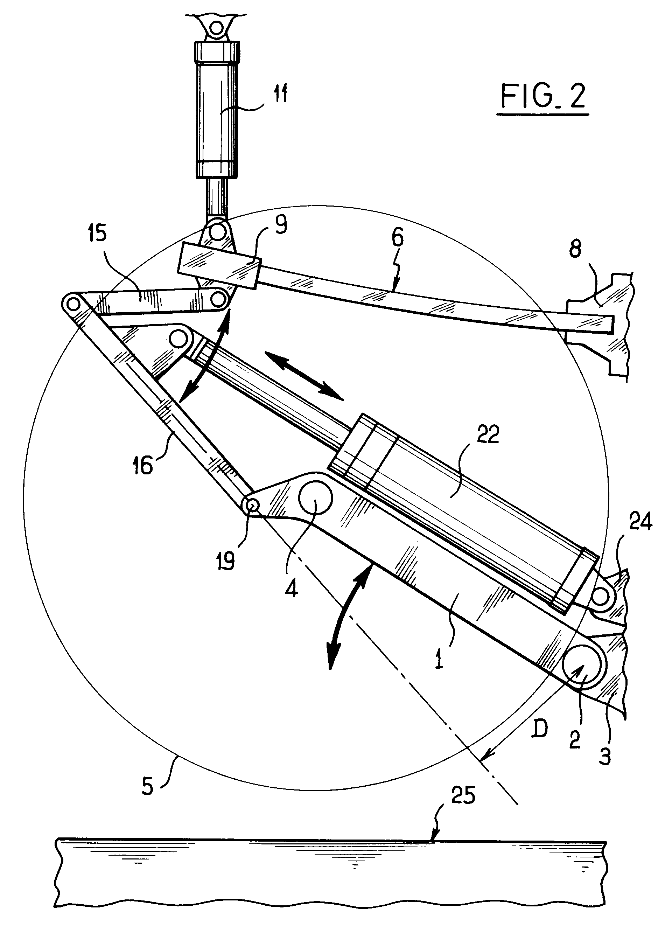

En référence aux figures 1 et 2, dans le premier mode de réalisation le train de roulage rétractable selon l'invention comporte une poutre basculante 1 ayant une extrémité fixée de façon articulée autour d'un axe de basculement 2 porté par un bossage 3 solidaire du châssis du véhicule. La poutre basculante 1 supporte un axe de rotation 4 pour une ou plusieurs roues montées en parallèle et figurée par un trait fin 5 sur les figures.

Un ressort à lame 6 est disposé au-dessus de la poutre basculante 1 et a une première extrémité 7 encastrée dans un bossage 8 solidaire du châssis du véhicule, et une seconde extrémité encastrée dans une pièce d'assemblage 9 fixée par un axe d'articulation 10 à une première extrémité d'un amortisseur 11 s'étendant sensiblement verticalement au-dessus de la seconde extrémité du ressort à lame 6 et ayant lui-même une seconde extrémité montée sur un axe d'articulation 12 porté par un bossage 13 solidaire du châssis du véhicule.

La seconde extrémité du ressort à lame 6 est également reliée à la poutre basculante 1 par un ensemble articulé généralement désigné en 14 et comprenant une bielle 15 et un levier 16 articulés l'un à l'autre autour d'un axe d'articulation 17. L'extrémité supérieure de la bielle 15 est reliée à un axe d'articulation 18 porté par la pièce d'assemblage 9 et le levier 16 a une extrémité inférieure articulée autour d'un axe de commande de basculement 19 porté par la poutre basculante 1. Le levier 16 comporte en outre un gousset 20 portant un axe d'articulation 21 auquel est reliée une extrémité d'un vérin de commande 22 dont l'autre extrémité est montée de façon articulée sur un axe d'articulation 23 porté par un bossage 24 solidaire du châssis du véhicule.

Dans la position abaissée du train de roulage représentée sur la figure 1, le vérin de commande 22 est rétracté, la bielle 15 et le levier 16 sont alignés l'un avec l'autre et les roues 5 sont alors en contact avec une piste de roulement 25. Le ressort à lame 6 supporte ainsi le poids du véhicule tandis que l'amortisseur 11 assure un amortissement des oscillations auxquelles le véhicule est soumis par rapport à la piste de roulement 25. L'alignement entre la bielle 15 et le levier 16 est maintenu de préférence en prévoyant soit un vérin de commande à verrouillage interne comme dans le mode de réalisation illustré sur les figures, soit un système de verrouillage comportant d'une façon connue en soi des butées portées par la bielle 15 et le levier 16, ceux-ci étant rappelés vers une position de butée par un ressort. Cet alignement peut également être maintenu par un verrouillage hydraulique du vérin de commande 22. Lorsque le véhicule est sustenté par les moyens de sustentation sans contact, le vérin de commande 22 est actionné dans un sens de l'allongement et l'alignement entre la bielle 15 et le levier 16 est alors rompu comme illustré par la figure 2, ce qui provoque un basculement vers le haut de la poutre basculante 1 et une rétraction des roues 5 à l'intérieur de logements appropriés (non représentés) prévus sur le véhicule. On remarquera sur la figure 2 que les roues 5 ne sont plus en contact avec la piste de roulement 25 mais la garde au sol du véhicule lorsqu'il est en sustentation sans contact est généralement inférieure à la garde au sol du véhicule lorsque le train de roulage est descendu. Lors de la descente du train de roulage, le vérin de commande 22 doit donc assurer un couple suffisant sur la poutre basculante 1 pour soulever le véhicule à partir du moment où les roues 25 sont en contact avec la piste de roulement 25. A cet effet, la poutre basculante 1 est de préférence recourbée à son extrémité adjacente à l'axe de commande de basculement 19 afin que cet axe de commande de basculement soit décalé par rapport à une direction longitudinale de la poutre basculante.

Ainsi, lorsque le vérin de commande 22 est en position totalement allongée, comme illustré sur la figure 2, et que la poutre basculante 1 est sensiblement parallèle au vérin de commande 22, le levier 16 qui transmet l'effort de descente du train appliqué lors de la rétraction du vérin de commande 22 est suffisamment décalé pour que la distance D (voir figure 2) séparant l'axe de basculement 2 de la direction de la force appliquée à l'axe de commande de basculement 19, soit suffisamment importante.

De plus, on remarquera également que les positions relatives du bossage de fixation 8 de la première extrémité 7 du ressort à lame 6 et du bossage de fixation 13 de l'amortisseur 11 sont choisies pour assurer le maintien d'une précontrainte sur la lame ressort 6 quelle que soit la configuration du train de roulage. En particulier, dans le cas illustré sur les figures 1 et 2 où l'amortisseur 11 est sensiblement vertical et le ressort à lame 6 est sensiblement horizontal, il suffit que le décalage en hauteur des bossages 13 et 8 soit supérieur à la longueur de l'amortisseur 11 en position totalement étendue. Le ressort à lame 6 reste précontraint même lorsque le train de roulage est complètement rétracté comme illustré sur la figure 2. La pièce d'assemblage 9 peut alors être considérée comme un point fixe et le verrouillage interne du vérin de commande 22 assure donc une immobilité totale de l'ensemble du train de roulage.

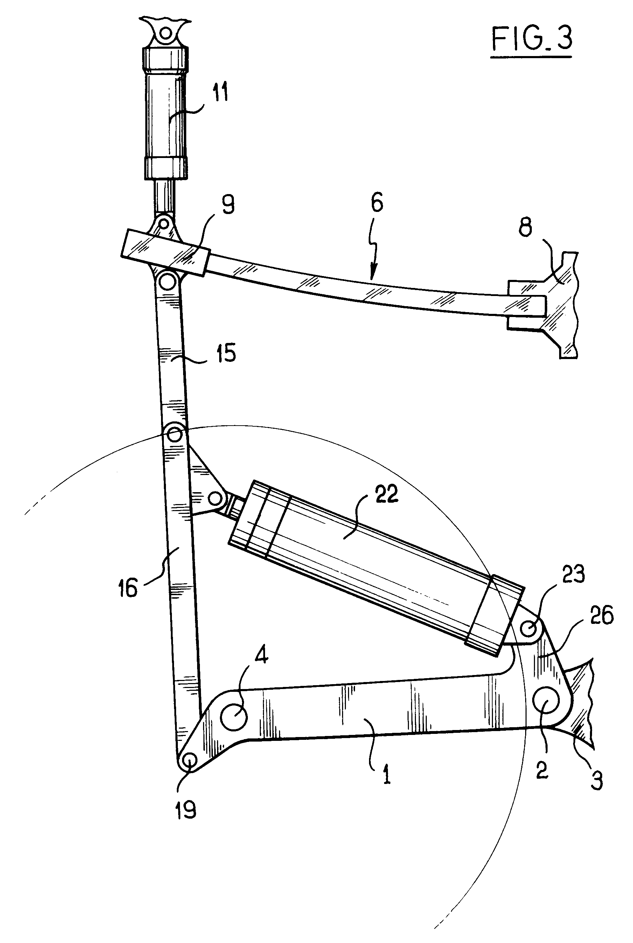

La figure 3 illustre une variante de réalisation du mode de réalisation des figures 1 et 2. Sur cette variante de réalisation les éléments analogues ont été indiqués avec les mêmes références numériques. On constate aisément que la seule différence par rapport au mode de réalisation précédent est la fixation du vérin de commande 22 qui n'est plus réalisée au bossage 24 solidaire du véhicule comme dans le mode de réalisation des figures 1 et 2 mais sur un bossage 26 de la poutre basculante 1. Ainsi on économise un point de fixation sur le véhicule ce qui permet d'alléger de façon correspondante la structure du véhicule puisque celle-ci doit normalement être renforcée au niveau d'un point de fixation. De plus, lors des manoeuvres du train de roulage, les efforts du vérin de commande 22 sont directement transmis aux pièces dont le mouvement relatif est recherché et on obtient donc un meilleur rendement des forces appliquées. Pour un rendement optimal des forces appliquées, le bossage 26 s'étend de préférence d'un côté opposé à la partie recourbée de la poutre basculante portant l'axe de commande de basculement 19 afin que l'axe d'articulation 23 du vérin de commande 22 soit décalé de l'axe longitudinal de la poutre basculante 1 sur un côté opposé à l'axe de commande de basculement 19.

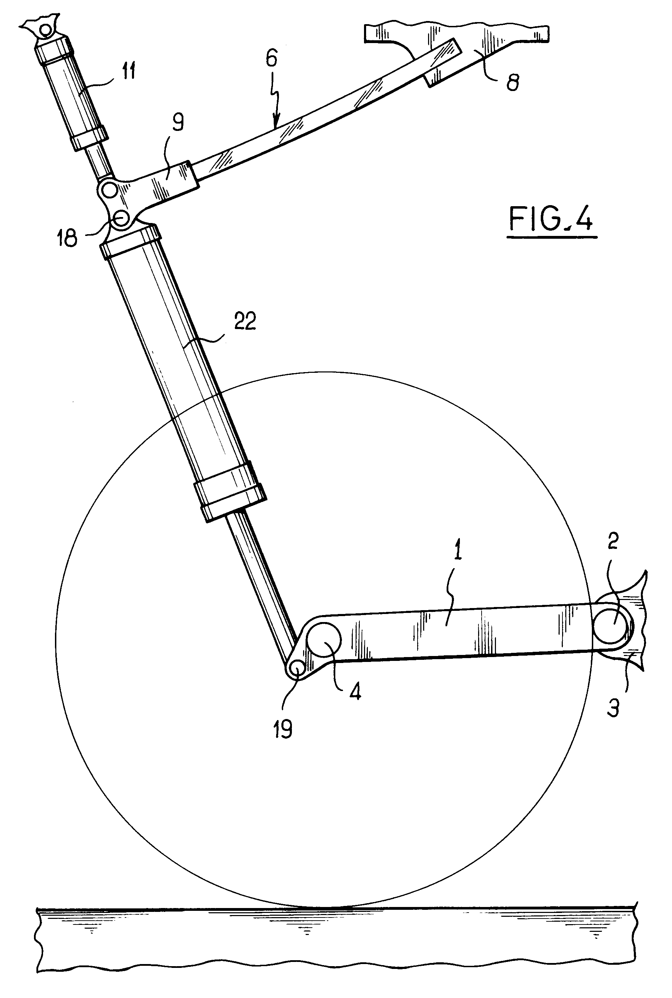

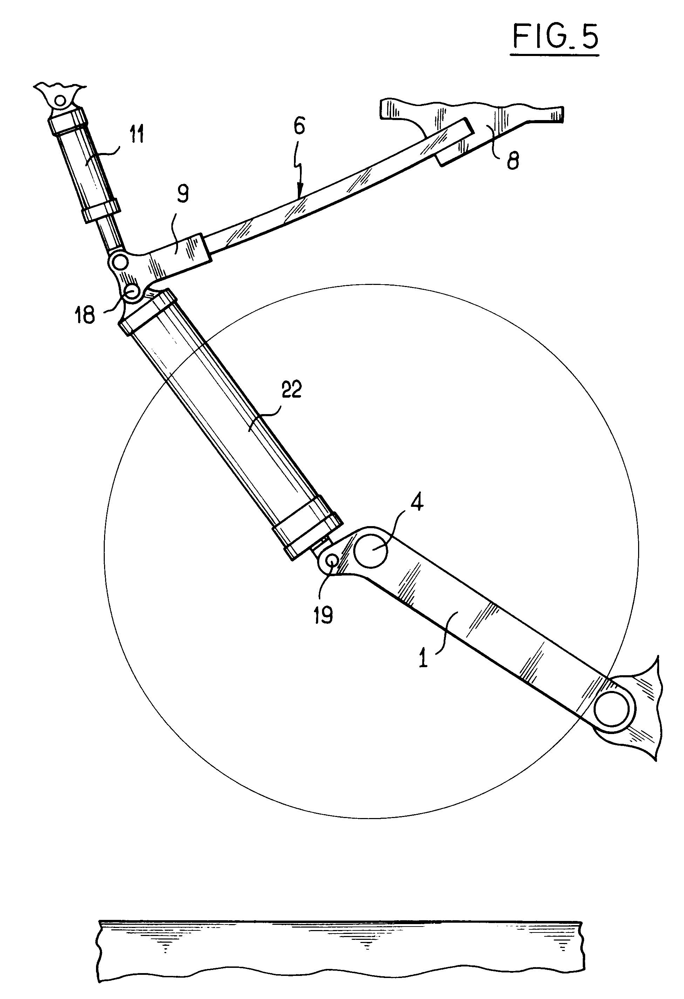

Les figures 4 et 5 illustrent un autre mode de réalisation de l'invention dans lequel le vérin de commande 22 est directement relié à l'axe d'articulation 18 de la seconde extrémité du ressort à lame 6 d'une part et à l'axe de commande de basculement 19 porté par la poutre basculante 1 d'autre part. Pour une meilleure exploitation de l'espace disponible, le ressort à lame 6 est de préférence disposé de façon oblique comme illustré sur les figures. Ce mode de réalisation présente l'avantage d'avoir une structure très simple mais il présente l'inconvénient que le vérin de commande 22 supporte toutes les contraintes de charge du véhicule pour une position abaissée du train de roulage alors que dans les modes de réalisation décrits précédemment, la majorité de ces contraintes étaient supportées par l'alignement de la bielle 15 et du levier 16.

Bien entendu l'invention n'est pas limitée aux modes de réalisation illustrés et est susceptible de variantes qui apparaîtront à l'homme de métier. En particulier, bien que le train de roulage selon l'invention ait été illustré avec une seule poutre basculante sur laquelle les roues 5 peuvent être montées en porte à faux ou en diabolo, on peut prévoir un train de roulage comportant plusieurs poutres basculantes intercalées entre les roues ou disposées aux extrémités d'une série de roues montées en parallèle, chaque poutre basculante étant bien entendu associée à un vérin de commande, un ressort à lame et un amortisseur.

## Revendications

1. Train de roulage rétractable pour un véhicule à sustentation sans contact comportant une poutre basculante (1) ayant une extrémité fixée de façon articulée au véhicule autour d'un axe de basculement (2) et supportant un axe de rotation (4) pour au moins une roue (5), la poutre basculante étant reliée de façon articulée à un ressort de lame (6), à un amortisseur (11) et à un vérin de commande (22), caractérisé en ce que le ressort à lame (6) a une première extrémité (7) fixée au véhicule et une seconde extrémité (9) fixée de façon articulée à une première extrémité de l'amortisseur (11), l'amortisseur (11) a une seconde extrémité fixée de façon articulée au véhicule, et le vérin de commande (22) est associé de façon articulée d'une part à la seconde extrémité du ressort à lame (6) et d'autre part à un axe de commande de basculement (19) porté par la poutre basculante en un point espacé de l'axe de basculement (2) pour commander l'orientation de la poutre basculante.

2. Train de roulage selon la revendication 1 caractérisé en ce que le vérin de commande (22) a une première extrémité fixée de façon articulée au véhicule et une seconde extrémité fixée de façon articulée à un ensemble (14) comprenant une bielle (15) et un levier (16) articulés l'un à l'autre et ayant des extrémités respectivement reliées de façon articulée à la seconde extrémité (9) du ressort à lame (6) et à l'axe de commande de basculement (19).

3. Train de roulage selon la revendication 2 caractérisé en ce que l'axe de commande de basculement (19) est décalé par rapport à une direction longitudinale de la poutre basculante (1).

4. Train de roulage selon la revendication 1 caractérisé en ce que le vérin de commande (22) a une première extrémité fixée de façon articulée à la poutre basculante (1) autour d'un axe d'articulation (23) et une seconde extrémité fixée de façon articulée à un ensemble (14) comprenant une bielle (15) et un levier (16) articulés l'un à l'autre et ayant des extrémités respectivement reliées de façon articulée à la seconde extrémité (9) du ressort à lame (6) et à l'axe de commande de basculement (19).

5. Train de roulage selon la revendication 4 caractérisé en ce que l'axe de commande de basculement (19) est décalé par rapport à une direction longitudinale de la poutre basculante (1).

6. Train de roulage selon la revendication 5 caractérisé en ce que l'axe d'articulation (23) du vérin de commande à la poutre basculante (1) est décalé de l'axe longitudinal de la poutre basculante sur un côté opposé à l'axe de commande de basculement (19).

7. Train de roulage selon la revendication 1 caractérisé en ce que le vérin de commande (22) a une première extrémité fixée de façon articulée à la seconde extrémité (9) du ressort à lame (10) et une seconde extrémité fixée de façon articulée à l'axe de commande de basculement (19).

8. Train de roulage selon la revendication 7 caractérisé en ce que l'axe de commande de basculement (19) est décalé par rapport à une direction longitudinale de la poutre basculante (1).

9. Train de roulage selon la revendication 1 caractérisé en ce que la première extrémité (7) du ressort à lame (6) et la seconde extrémité de l'amortisseur (11) ont des positions relatives assurant un maintien d'une contrainte de flexion sur le ressort à lame pour toute configuration du train de roulage.
